# EUROPEAN PATENT APPLICATION

(11) **EP 4 838 084 A1**
(43) Date of publication of application: **11.11.2026**
(21) Application number: 25175075.8
(22) Date of filing: 08.05.2025
(51) Int. Cl.: F03D 1/00, F03D 80/80

(54) **ASSEMBLY FOR SUPPORTING COMPONENTS ARRANGED INSIDE A NACELLE OF A WIND TURBINE, A NACELLE AND AN ARRANGEMENT**

(71) Applicant: Nordex Energy SE & Co. KG, 22419 Hamburg (DE)
(72) Inventor: Wackrow, Torsten, 22419 Hamburg (DE)
(74) Representative: Epping - Hermann - Fischer

(57) **Abstract**

Present disclosure relates to a frame assembly (200) for supporting components arranged inside a nacelle (106) of a wind turbine (100).

The assembly (200) comprising:
- a first supporting frame (220) comprising a first supporting portion (234) and a second supporting portion (236), wherein the second supporting portion (236) is arranged below the first supporting portion (234), and
- a second supporting frame (222) mounted on the first supporting frame (220) and attached thereto,
wherein,
- the second supporting frame (222) is configured to support an electric generator (226) of the wind turbine (100), and
- the first supporting frame (220) is configured to support at least one other component (228) of the wind turbine.

The present disclosure further relates to a nacelle of a wind turbine, and a wind turbine comprising the nacelle.

## Description

Present disclosure relates to an assembly for supporting components arranged inside a nacelle of a wind turbine, a nacelle and an arrangement comprising the nacelle.

Wind turbines are widely known from the prior art and are used to convert wind energy into electrical energy.

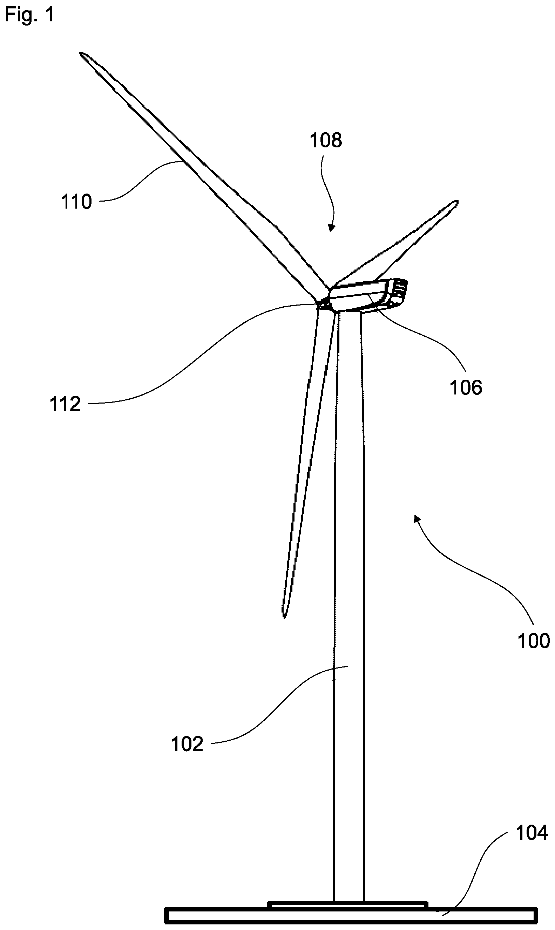

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are movably arranged on a rotor hub 112.

During operation, the rotor 108 is set in rotation by an air flow, for example wind interacting with the blades 110 resulting in forces acting on the blades 110. This rotational movement is transmitted to the generator via the transmission supporting the rotor shaft, with or without a gearbox. The generator converts the mechanical energy of the rotor 108 into electrical energy.

Electrical equipment, e.g., a generator, a transformer, a converter and so on, may be placed close to the rotor 108 and inside the nacelle 106 to keep mechanical and electrical transmission losses low and to protect the equipment from environmental influences. The mounting of relatively heavy equipment at an elevated position requires a strong and relatively stiff mounting structure to be attached at the upper end of the tower 102. Besides, the mounting structure is required to meet certain design requirements to allow movement of personnel, equipment, machines, tools, etc., with ease, without causing any hindrances.

As the size of wind turbines and their associated electrical equipment grows due to ever increasing demand for renewable energy, there is a continuous need for improved support structures inside a nacelle of a wind turbine. Preferably, such support structures should be strong enough to carry heavy equipment, compact enough to be transported by road during pre-assembly and/or to the installation site, and modular enough to enable safe and easy access inside the nacelle for service personnel, tools, machines, etc., once the support structure is attached to a tower.

According to a first aspect of the present disclosure, a frame assembly for supporting components arranged inside a nacelle of a wind turbine is disclosed.

The assembly comprises a first supporting frame comprising a first supporting portion and a second supporting portion, wherein the second supporting portion is arranged below the first supporting portion, and a second supporting frame mounted on the first supporting frame and attached thereto.

The second supporting frame is configured to support at least an electric generator of the wind turbine, and the first supporting frame is configured to support at least one other component of the wind turbine.

This construction with the first supporting frame and the second supporting frame allows the nacelle of the wind turbine to be constructed modularly. The modules, i.e., the first supporting frame and the second supporting frame can be transported separately to the site where the wind turbine is to be installed. This is advantageous in cases where the weight of each module is a constraint or limited, for example, during road transport, and in cases where the height and the width of the modules are also limited to a certain size, e.g., to meet transport requirements of a country.

By constructing the support structure of a nacelle of a wind turbine in a modular way with a first supporting frame and a second supporting frame, it is possible to construct very large yet customizable nacelles, whereby the components of the nacelles can still be transported on roads.

Moreover, modular construction and assembly of the first and second supporting frames allow compartmentalization, leading to better and organized placement of components, subassemblies, etc. This would lead to optimization of load transfer, separation or grouping of components or subassemblies based on their functional capabilities/limitations, improved access within the nacelle during certain situations, e.g., emergencies, and so on.

The second supporting frame is configured (or structured) to support at least an electric generator of the wind turbine, and the first supporting frame is configured (or structured) to support at least one other component of the wind turbine. The other component may be, for example, a power converter, a cabinet, etc.

The first and the second supporting frames may be attached, for example, via fasteners, pins, any type of mechanical joints and so on.

According to an embodiment, at least one of the first supporting frame and the second supporting frame comprises a connecting portion configured to be attached to a main frame of the wind turbine.

A main frame of the wind turbine is generally mounted on the tower of the wind turbine and is designed to carry the load of the nacelle and transfer the same to the tower.

For example, the main frame may carry the first supporting frame, and the second supporting frame is mounted on top of the first supporting frame, and components of choice are attached to and carried by both these supporting frames. Therefore, the connecting portion must be stiff enough to carry high loads and to minimize or avoid vibrations.

In an embodiment, the connecting portion may be provided only in the first supporting frame.

In another embodiment, the connecting portion may be provided only in the second supporting frame.

In another embodiment, the connecting portion may extend between the first and second supporting frames.

In another embodiment, each of the first and second supporting frames comprises a separate connecting portion, and both the connecting portions may be attached to form a unified connecting portion.

The connecting portion may be fabricated integrally with the first and/or second supporting frames, or may be connected using connecting means, e.g., fasteners.

For example, a connecting portion may be fabricated only with the first supporting frame (e.g., via welding) while the second supporting frame may be attached to the connecting portion via fasteners.

According to a further embodiment, a height of the main frame is smaller than the height of the connecting portion. This allows the connecting portion to be realized, e.g., about the complete height of the first supporting frame, and the height of the first supporting frame can be higher than the height of the main frame. By this solution, a large nacelle can be constructed such that a majority of load is applied or distributed within the first supporting frame.

In the context of this disclosure the following three dimensions or directions are described. The nacelle extends in a vertical direction which is the first direction (substantially parallel to an axial extension of the tower on which the nacelle is mounted). Further, the nacelle extends in a longitudinal direction (second direction) perpendicular to the vertical direction (tower axis) and which is substantially along a drive train or an axis of the rotor (shaft) to be located in the nacelle (it should be noted though, that the drive train or the rotor axis can be slightly deviating relative to the horizontal by approximately 5°). Furthermore, the nacelle extends in a widthwise direction which is the third direction. The longitudinal direction and the widthwise direction are both perpendicular to the vertical direction, and to each other. In other words, the three dimensions to describe the nacelle are vertical, longitudinal and widthwise. References are made to these three dimensions or directions to describe position, orientation, etc., of the frame assembly, components, etc., present in the nacelle as well as outside the nacelle.

For example, a height of the main frame may be an average height determined along the vertical direction of the main frame between the rotor side till the gearbox side of the main frame.

In an embodiment, the height of the connecting portion (determined along vertical direction) may be smaller than a height of the first supporting frame, but higher than the height of the main frame. This may lead to material optimization, cost savings and weight reduction.

In an embodiment, the dimensions e.g., height, and the position of the connecting portion may determine the height and position of the main frame. For example, if the connecting portion connects or extends through both the first and second supporting frames, the main frame may be connected to both the first supporting frame and the second supporting frame via the connecting portion. In such a case, the height of the main frame may extend partly along heights of both first and second supporting frames.

In an embodiment, the main frame may be attached at an elevated position relative to the first supporting frame such that a base of the main frame connecting to the tower (flange) is at an elevated plane than a plane of the second supporting portion.

In another embodiment, an upper part of the main frame where the drive train e.g., rotor bearing assembly is seated may extend at a same plane as the plane of the first supporting portion.

In another embodiment, the upper part of the main frame may be inclined or coplanar with respect to the first supporting and/or the base frame.

The two-level modular frame assembly, therefore, allows the height of the main frame to be reduced, resulting in material, weight and cost reduction.

Further, the two-level modular frame assembly allows the position of the main frame to be adjusted or customized to optimize the shape, dimensions, compactness, load distribution, accessibility and so on of the nacelle assembly.

In at least one embodiment, the first supporting frame comprises a pair of first side frames, wherein the pair of first side frames together with the first supporting portion and the second supporting portion are configured to define at least a first compartment of the nacelle. In other words, the pair of first side frames together with the first supporting portion and the second supporting portion serve as frame boundaries circumscribing the first compartment.

In another embodiment, each of the pair of first side frames, the first supporting portion and the second supporting portion comprise a plurality of interconnected beams.

In another embodiment, the first and second supporting portions may be configured as solid platforms, planks or plates instead of interconnected beams.

The at least one other component e.g., a converter, a cabinet, etc., carried within (or accommodated inside) the first supporting frame, could be attached to the first side frame(s), or could be suspended from the first supporting portion of the first supporting frame, or may be simply seated on the second supporting portion.

In another preferred embodiment, the second supporting frame comprises at least one second side frame, and a base frame, wherein each of the at least one second side frame and the base frame comprises a plurality of interconnected beams.

The base frame and the at least one second side frame, for example, two second side frames, may define a second compartment of the nacelle directly above the first compartment. The second compartment may enclose the generator, and a part of a drive train, e.g., the gearbox, a coupling between the gearbox and the rotor shaft bearing assembly, and so on.

According to an embodiment, at least a portion of the base frame is attached to the first supporting portion of the first supporting frame and a remaining portion of the base frame is configured to be attached to the connecting portion and/or the main frame.

For example, if the connecting portion is provided in the first supporting frame alone, then a portion of the base frame resting on the connecting portion may be connected to the connecting portion. At the same time, the portion of the base frame adjacent to the main frame may also form a connection with the main frame.

This may be advantageous in terms of second supporting frame distributing the loads acting on it to the main frame as well as the first supporting frame.

In an embodiment, the base frame may be configured as a solid platform, a plank or a plate instead of interconnected beams.

This construction allows the second supporting frame to be not only mounted on the first supporting frame, but also a part thereof is supported by the connecting portion which is directly attached to the main frame.

In another embodiment, the base frame and the first supporting portion form an identical interface for at least a portion of the length of the assembly.

According to an embodiment, identical interface may be characterized by the interconnected beams of the first supporting frame being directly aligned or arranged in a same manner as the corresponding interconnected beams of the second supporting frame, and, after mounting the first supporting frame together with the second supporting frame, the two supporting frames are building a very stable frame assembly for the nacelle.

In another embodiment, identical interface may refer to structural and/or design identicalness of the base frame of the second supporting frame with the first supporting portion of the first supporting frame to which the base frame is attached.

In another embodiment, identical interface may refer to conformity of contact surfaces between the first supporting frame and the second supporting frame when they are interconnected.

In another embodiment, identical interface may refer to identicalness in terms of geometry and/or one or more-dimensional characteristics between the first supporting portion of the first supporting frame and the base frame of the second supporting frame.

The identical interface, according to an embodiment, may also mean that the first supporting frame and the second supporting frame have cross-beams extending in the widthwise direction of the nacelle positioned at same distances along the longitudinal direction. Similarly, the vertical beams of first supporting frame and the second supporting frame are positioned at equal distances so that they align perfectly when viewed from the top.

In another embodiment, the assembly comprises a third supporting frame attachable to at least one of a rear end of at least one of the first supporting frame and the second supporting frame.

For example, the third supporting frame may be attached to a rear end of at least one of the first supporting frame and the second supporting frame. In this scenario, the third supporting frame may extend predominantly along widthwise direction of the nacelle.

In another example, the third supporting frame may be attached to one or both the lateral sides of the frame assembly proximal to the rear end, for example, to one (or both) of the first side frame and/or the at least one second side frame. In such a scenario, the third supporting frame may extend predominantly along the longitudinal direction of the nacelle.

In an embodiment, the third supporting frame extending in a widthwise direction of the nacelle is attached to a rear end of at least one of the first supporting frame and the second supporting frame, or at an interface of the first supporting frame and the second supporting frame.

"Rear end" or "rear side" means the opposite side or opposite end of the nacelle away from the main frame or the rotor of the wind turbine. In other words, if the first and/or the second supporting frame is attached to the main frame at a fore end or front end of the nacelle, the third supporting frame is attached at the rear end opposite to the fore end or front end.

Alternately, if the longitudinal direction is defined such that the front end or the fore end is the location where the rotor is located, then the rear end is referred to as the distal location where the nacelle (or the frame assembly) terminates opposite to the rotor.

For an upwind type wind turbine, fore end or front end is the windward side of the nacelle, and the rear end is the leeward side of the nacelle.

According to a preferred embodiment, the third supporting frame supports at least a transformer of the wind turbine such that the transformer is located outside the first compartment of the nacelle. This means that the transformer is at a distance from each of the first and second supporting frames in a longitudinal direction of the nacelle. The transformer generates a lot of heat and cooling of the transformer is easier than inside the nacelle.

In an embodiment, the third supporting frame may be non-identical to the first and/or second supporting frame with respect to at least one dimension, for example, the width. According to a second aspect of the present disclosure, a nacelle for a wind turbine is disclosed. The nacelle comprises the frame assembly as described above, an upper nacelle module and a lower nacelle module, wherein the upper nacelle module and the lower nacelle module are separate modules. In one or more states, for example, during lifting or final assembled state ready for operation of the wind turbine, the lower nacelle module is attached beneath the upper nacelle module and to the upper nacelle module.

The first supporting frame constitutes the framework or skeleton for the lower nacelle module, while the second supporting frame constitutes the framework or skeleton for the upper nacelle module.

In other words, the upper nacelle module may be built around the second supporting frame, and the lower nacelle module is built around the first supporting frame, with each of the supporting frames serving as a reinforcing structure for its respective nacelle module.

In one embodiment, the second supporting frame serves as a reinforcing structure for the first supporting frame, and therefore, to the entire nacelle.

The construction may be such that the first supporting frame may contribute, e.g., equal to or more than 55% of load bearing capacity of the frame assembly, while the remaining may be taken care of by the second supporting frame.

The upper nacelle module is dimensioned to accommodate, at least partly, a transmission assembly and an electric generator of the wind turbine, and the lower nacelle module is dimensioned to accommodate at least one other component, in particular at least one electric component excluding a transformer of the wind turbine.

The construction of the nacelle with an upper nacelle module and a lower nacelle module allows the two modules to be handled separately, e.g., they can be transported separately to the site where the wind turbine is to be installed or can be lifted or lowered at the installation site as separate modules. The limitations for road transport regarding height and weight allow the nacelle to be constructed to be much larger as the limits regarding height and weight could be reached with each of the two nacelle modules.

The first and second supporting frames inside the respective nacelle modules also serve as support structures for carrying heavier, bulkier equipment, even during non-operating conditions.

For example, the first supporting frame forming a reinforcing skeleton (structure) for the lower nacelle module carries equipment such as the converter, cabinet, etc., such that all these equipment can be conveniently moved, lifted, lowered, stored, stacked, repositioned, assembled and so on while they are accommodated inside the lower nacelle module.

Similarly, the generator (among other components) may be carried by the second reinforcing frame inside the upper nacelle module such that the upper nacelle module carrying the generator may be conveniently moved, lifted, lowered, stored, stacked, repositioned, assembled and so on.

The two nacelle modules preferably may have the same width and are fixed together so that they form a coherent, compatible structure with higher stability and stiffness, than if they were separate modules.

In a preferred embodiment, the length of the upper nacelle module and the lower nacelle module may also be identical or substantially identical. The lower nacelle module is fixed to the upper nacelle module, forming a first interface, by connecting means selected from one or more of fasteners, pins and rivets.

In an embodiment, a height of the second supporting frame, and therefore, the upper nacelle module may be lesser than a height of the first supporting frame, and therefore, the lower nacelle module.

According to an embodiment, the nacelle comprises an additional nacelle module dimensioned to accommodate a transformer of the wind turbine, wherein the additional nacelle module is located outside the lower nacelle module.

The additional nacelle module, therefore, may form a second interface with the upper and/or lower nacelle module, with the second interface being different from the first interface.

According to a third aspect of the present disclosure, a wind turbine is disclosed.

The wind turbine comprises a tower, a rotor and a nacelle as described above that is supported on the tower. The nacelle comprising a main frame, a transmission assembly supporting the rotor, and an electric generator configured to receive power from the rotor via the transmission assembly. The transmission assembly is mountable on the main frame. Further, at least the lower nacelle module of the nacelle is configured to be attached to the tower through the main frame, and at least one of the main frame and a part of the transmission assembly is bound by a sub-housing of the nacelle, in particular of the upper and the lower nacelle modules.

The sub-housing has the advantage that it can be customized, for example, to improve accessibility of the transmission assembly and/or the main frame.

Furthermore, the sub-housing may be arranged such that it allows other functions to be carried out, e.g., deployment of an on-board crane, on-boarding of components such as gearbox, yaw modules etc.

According to an embodiment, the sub-housing comprises an upper segment and a lower segment.

If the weight does not exceed the allowable limit, then the main frame inside the lower segment of the sub-housing which may manifest as an extension of the lower nacelle module can be transported as one unit.

Further advantages, features and further developments are set out by the following exemplary embodiments, which are explained in conjunction with the attached figures. The same or similar elements or elements acting in the same way are provided with the same reference numerals in the following figures, even if they belong to different embodiments.
Figure 1 shows the main components of a wind turbine;
Figure 2 shows the side view of a main frame, a transmission assembly attached on the main frame and a frame assembly according to embodiments of the present disclosure;
Figure 3 shows the perspective view of the frame assembly of Figure 2 from a first side;
Figure 4 shows the perspective view of the frame assembly of Figure 2 from a second side,;
Figure 5 shows a perspective view of an upper nacelle module of the nacelle;
Figure 6 shows a perspective view of a lower nacelle module of the nacelle;
Figure 7A shows in perspective view a first configuration of the upper nacelle module and the lower nacelle module depicted in Figures 5 and 6, wherein the upper nacelle module is mounted on the lower nacelle module;
Figure 7B shows in perspective view a second configuration of the upper nacelle module and the lower nacelle module, wherein the upper nacelle module is mounted on the lower nacelle module;
Figure 8 shows a side view of the nacelle with the additional nacelle module and a portion of the sub-housing;
Figure 9 shows a side view of the nacelle with the sub-housing having upper and lower segments;
Figures 10 and 11 show the perspective views of the upper nacelle module mounted on the lower nacelle module along with the additional nacelle module and an exemplary cooling and/or sensing arrangement.

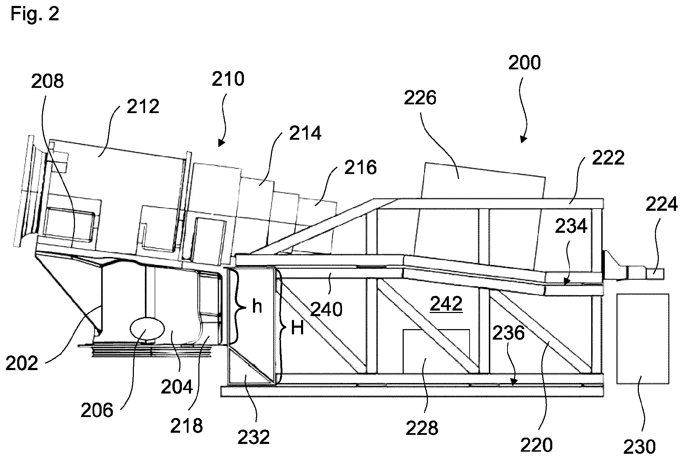

Figure 2 shows, in a side view, a frame assembly 200 (simply referred to as assembly throughout) for supporting components arranged inside a nacelle 106 of a wind turbine 100. The frame assembly 200 is attached to a main frame 202 which in turn is designed to be mounted on top of a tower 102 of the wind turbine 100. The main frame 202 comprises, for example, a sidewall 204, which, for example, may be circular or of any other shape, and one or more access openings 206 in the sidewall 204 for access by service personnel. One such access opening 206 may be provided at the rear side of main frame 202 which directly leads to a first compartment 242 defined by a first supporting frame 220. The top of the main frame 202 may be an inclined planar surface 208 for supporting a transmission assembly 210.

The transmission assembly 210 comprises a main bearing unit 212, a gearbox 214, and an output connection 216 that can be coupled to a generator 226. The main frame 202 comprises, extending along the sidewall 204, a connecting structure 218 that extends vertically from the lower end of the main frame 202 to the upper end. Also, the inclined planar surface 208 of the main frame can be seen extending from front to rear along the longitudinal direction. The connecting structure 218 has a certain height h.

Attached to the main frame 202 is the first supporting frame 220 mounted together with a second supporting frame 222.

Attached to the rear side of the second supporting frame 222, according to an exemplary configuration, is a third supporting frame 224. The second supporting frame 222 is structured to support a generator 226. The first supporting frame 220 is structured to support other components 228, like a cabinet and/or converter.

Alternately, the third supporting frame 224 may be attached to the first supporting frame 220, or to an intersection between the first and the second supporting frames 220, 222.

The third supporting frame 224 supports a transformer 230, e.g., inside a compartment which is referred to as additional nacelle module 324 in some embodiments. The additional nacelle module 324 is attached to underside the third supporting frame 224 and behind the rear side of the first supporting frame 220. The transformer 230 is not located within the first supporting frame 220 or the second supporting frame 222 but may be spaced apart from the first supporting frame 220 and the second supporting frame 222 in the longitudinal direction due to an externally attached third supporting frame 224.

The first supporting frame 220 and/or the second supporting frame 222 comprises a connecting portion 232 with a height H. The connecting portion 232 is attached to the main frame 202 and the height h of the main frame 202 on the side where the connecting portion 232 is attached is smaller than the height H of the connecting portion 232. The connecting portion 232 is attached to the connecting structure 218 of the main frame 204.

The connecting structure 218 is a reinforced part of the main frame 202 which may be configured to support the gearbox 214 or a portion of the main bearing unit 212. Also, the connecting structure 218 allows the main frame 202 to be attached to the frame assembly 200 through the connecting portion 232. Thus, the loads originating at the frame assembly 200 may be transmitted to the main frame 202 via the connecting structure 218.

Connection between the connecting structure 218 and the connecting portion 232 may be performed from within (inside) the first supporting frame 220 or from within the main frame 202, e.g., by fastening along a longitudinal direction of the nacelle.

The first supporting frame 220 comprises a first supporting portion 234 and a second supporting portion 236. The second supporting portion 236 is arranged below the first supporting portion 234. The second supporting frame 222 is mounted on the first supporting portion 234 and attached thereto by connecting means 238.

The first supporting frame 220 comprises a pair of first side frames 240, and the pair of first side frames 240 together with the first supporting portion 232 and the second supporting portion 236 define at least the first compartment 242 of the nacelle 106.

The first compartment 242 may define the space within which the components such as converter, etc., may be housed and supported.

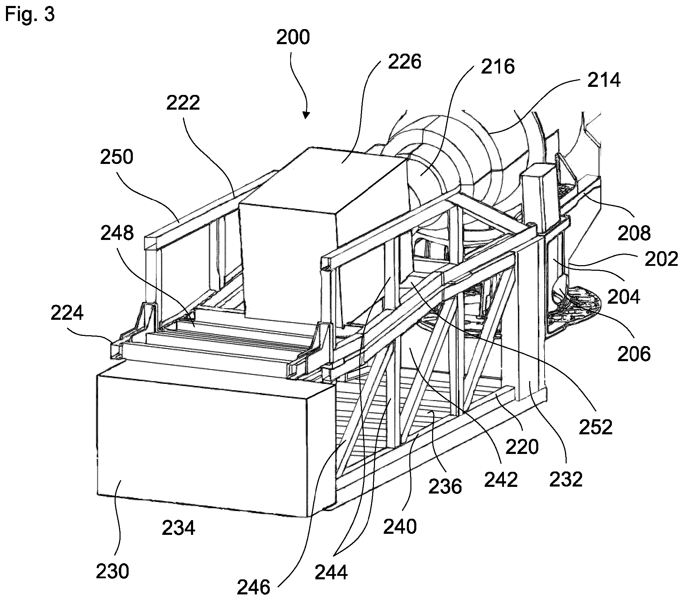

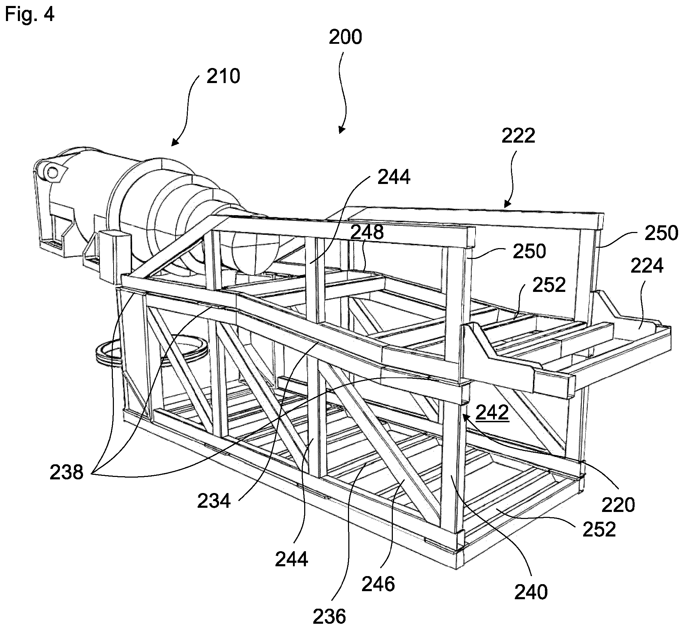

Figures 3 and Figure 4 show perspective views of the assembly shown in Figure 2.

As depicted in Figures 3 and 4 along with Figure 2, the first side frames 240 of the first supporting frame 220 comprise several interconnected beams 244, 246. The beams 244 may be arranged, e.g., vertically and the beams 246 are diagonally arranged. In principle, any orientation of beams 244, 246 may be realized.

The second supporting frame 222 comprises a base frame 248 and at least one second side frame 250, e.g., a pair of second side frames 250 as shown, wherein the second side frame 250 comprises vertical beams 244. The base frame 248 further comprises horizontal beams 252 perpendicular to the longitudinal direction of the nacelle. The base frame 248 and the second side frames 250 circumscribe a second compartment 254 within which the generator 226 may be housed.

The vertical beams 244 of the first supporting frame 220 are vertically aligned with the vertical beams 244 of the second supporting frame according to an embodiment. In another embodiment, the horizontal beams 252 (extending along widthwise direction) of the second supporting frame 222 may also align with corresponding horizontal beams provided in the first supporting portion 234 and/or the second supporting portion 236 of the first supporting frame 220.

The base frame 248, the first supporting portion 234 and the second supporting portion 236 may also have diagonal beams arranged along the horizontal plane according to an embodiment.

In another embodiment, the at least one second side frame 250 may be foldably and/or detachably attached to the base frame 248, such that the second supporting frame 222 may be transported in a folded and/or detached condition. During installation or operating condition, the same may be unfolded and/or fixed in an upright state. Same applies to the first supporting frame 220 where the first side frames 240 and/or the first supporting portion 234 may be detached and/or folded relative to the second supporting portion 236 for transport.

In another embodiment, the at least one second side frame 250 and the base frame 248 of the second supporting frame 222 may be transported as separate frames, and assembled (fixed) on site for installation. Same applies to the first supporting frame 220.

After fixing the first supporting frame 220 and the second supporting frame 222 together, both supporting frames build a coherent, consolidated structure and the desired stiffness is achieved.

In one embodiment, the first supporting frame 220 may take part in reinforcement of the second supporting frame 222 and vice versa. For example, the second supporting frame 222 supporting the electric generator 226 imparts stability and stiffness to the frame assembly 200 and minimizes the extent of deflection or deformation, e.g., vertical deflection of the first supporting structure 220 underneath. Effects of dynamic loads such as fatigue and vibrations may be minimized.

With its base frame 248, the second supporting frame 222 may extend to cover the first supporting portion 234 of the first supporting frame 220 in entirety or substantially, as well as the connecting portion 232. This means that the bottom surface of the second supporting frame 222 is identical to the top surface of the first supporting frame 220 plus the top surface of the connecting portion 232.

As depicted, the third supporting frame 224 is attached to the second supporting frame 222 and extends about the whole width of the second supporting frame 222 at the rear side of the nacelle 106.

In another embodiment, the third supporting frame 224 is attached to the first supporting frame 220 alone extends about the whole width of the first supporting frame 220 at the rear side of the nacelle 106.

In yet another embodiment, there may be two (or more) third supporting frames 224, one connected to each of the first supporting frame 220, and the other connected to the second supporting frame 222, and both of them configured to support a component, e.g., a transformer and/or cooling arrangement and/or sensing arrangement. Examples include brackets, clamps, hooks, and so on.

In yet another embodiment, the third supporting frame 224 may be connected at the intersection of the first and the second supporting frames 220, 222. This means, a part of the third supporting frame 224 is joined to the first supporting frame 222, e.g., via fastening, etc., and remaining part of the third supporting frame 224 joins the second supporting frame 222, e.g., via fastening.

In yet another embodiment, the third supporting frame 224 may be attached to one or both the lateral sides (extremities in widthwise direction) of the frame assembly 200 proximal to the rear end 116, for example, to one (or both) of the first side frame 240 and/or the at least one second side frame 250, or the lateral part of the base frame 248 and/or the lateral part of the first supporting portion 234. In such a scenario, the third supporting frame 224 may extend predominantly along the longitudinal direction of the nacelle, and the component, e.g., a transformer attached to the third supporting frame 224 lies on the lateral side of the nacelle instead of rear end 116.

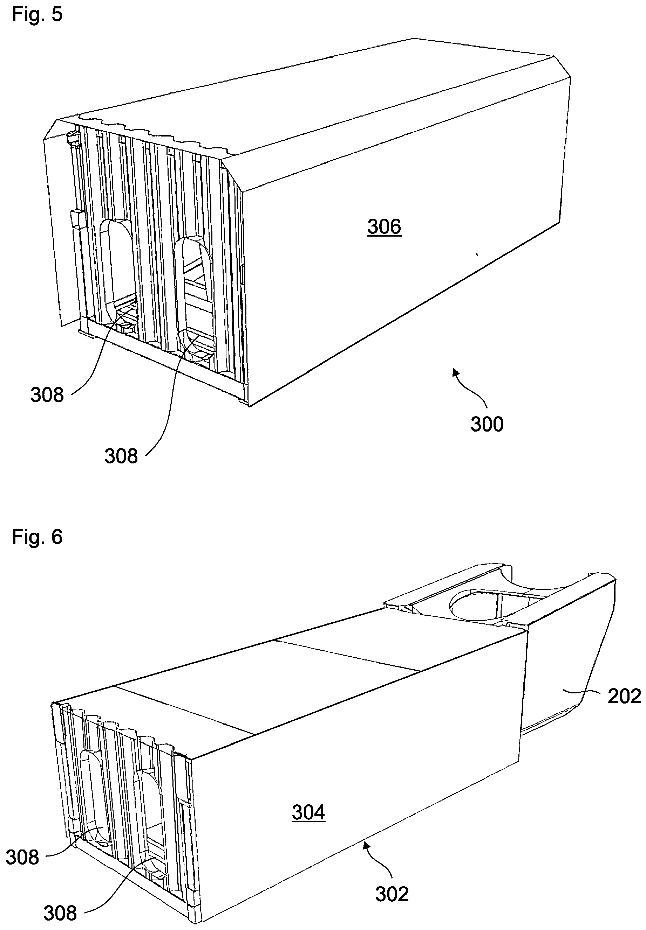

Figures 5 to 7 illustrate a nacelle of a wind turbine according to a second aspect of the disclosure. Figure 5 shows an upper nacelle module 300 and Figure 6 shows a lower nacelle module 302 along with the main frame 202 in a perspective view. The lower nacelle module 302 is built around the first supporting frame 220 and is covered with a housing 304 (also known as canopy or cover). The upper nacelle module 300, shown in Figure 5, is built around the second supporting frame 222 and is covered with a housing 306 (also known as canopy or cover). Both the housings 306 and 304 comprise openings 308 on the rear side of the modules. The openings 308 allow access to the third supporting frame 224, and therefore, to the component attached to it, e.g., the transformer, cooling and/or sensing arrangement, and so on.

Alternately, access to the third supporting frame 224 may be gained via lateral sides or roof of the upper nacelle module 300 and/or lateral sides or base of the lower nacelle module 302.

The lower nacelle module 302 shown in Figure 6 is attached to the main frame 202.

The upper nacelle module 300 may have identical or substantially identical width (measured along widthwise direction) and length (measured along longitudinal direction) as the lower nacelle module, however, may have a different height (or depth, measured along vertical direction) than the lower nacelle module.

In an embodiment, a roof of the upper nacelle module 300 may be composed of several panels, with one or two or more of the panels being movably and/or detachably arranged relative to the rest of the roof. This may facilitate opening or detachment of panels for assembly or disassembly purposes, e.g., lifting or lowering of transmission assembly, generator, etc., out of or into the upper nacelle module, respectively.

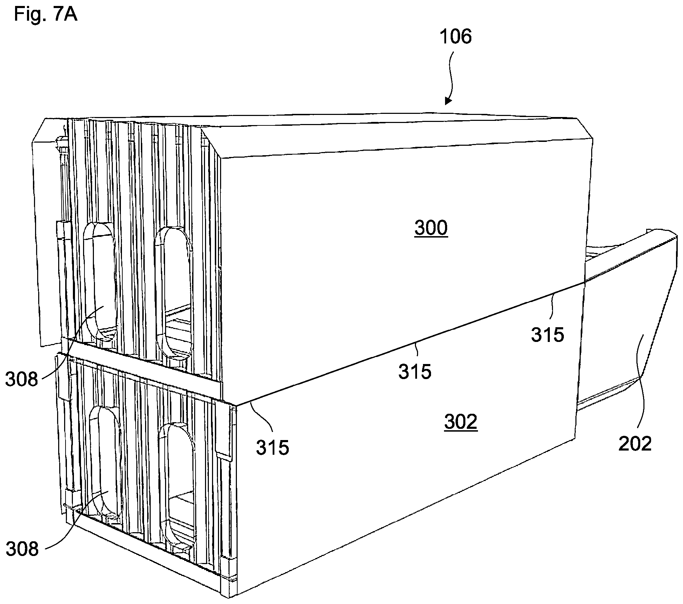

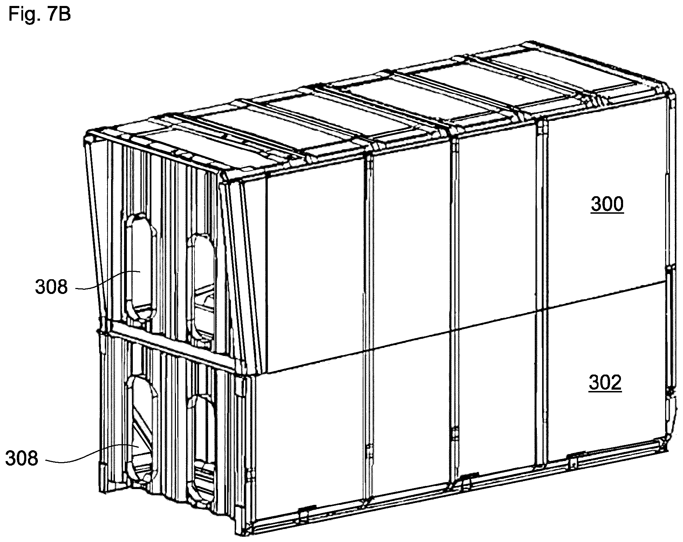

Figure 7A shows the upper nacelle module 300 and the lower nacelle module 302 of first configuration fixed together by connecting means 238 (not explicitly shown in Figure 7) like screws, rivets or bolts or any other means. The upper nacelle module 300 is attachable to the lower nacelle module 302 to form a first interface 315.

Figures 7A and 7B illustrate first and second configurations of each of upper and lower nacelle modules in assembled or mounted condition. The upper nacelle module 300 covers or substantially the whole top surface of the lower nacelle module 302. Further, the sidewalls as well as the rear wall of either module may be aligned. After being mounted together the upper nacelle module 300 and the lower nacelle module 302 constitute one large nacelle.

In another embodiment, the upper and lower nacelle modules 300, 302 may have different width and length. For example, the lower nacelle module may have a smaller length than the upper nacelle module, so that a void or a gap may be formed at the rear end 116 of the lower nacelle module under the extra length of the upper nacelle module. The void or the gap may be used to support a component, e.g., a transformer, which may be attached to an underside of the extra length of the upper nacelle module and/or the rear end 116 of the lower nacelle module adjacent to said void or gap. The transformer in this example may still remain outside the upper and lower nacelle modules.

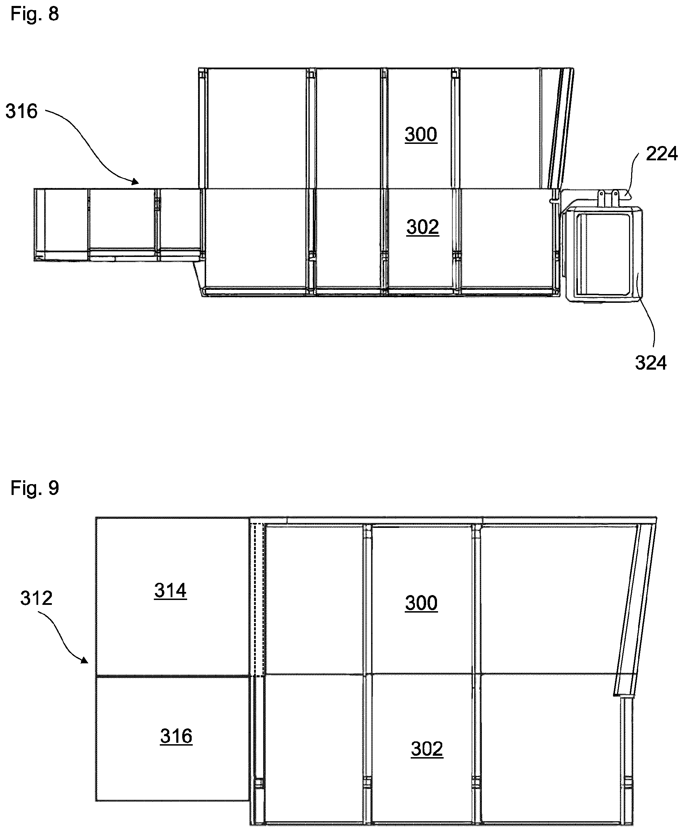

Figure 8 shows the upper nacelle module 300 mounted on the lower nacelle module 302 and the additional nacelle module 324 supported by the third supporting frame 224. As shown, the additional nacelle module 324 is suspended from the third supporting frame 224 and may house a component, e.g., transformer. Figure 8 further illustrates a lower segment 316 of a sub-housing 312 which will be described with reference to Figure 9 below.

Figure 9 shows a side view of the nacelle 106 with the sub-housing 312 comprising the upper segment 314 and the lower segment 316. Figure 9 may be referenced to a third aspect of the disclosure illustrating a wind turbine which is explained in accordance with the previously described aspects. According to this aspect, at least the lower nacelle module 302 of the nacelle 106 is configured to be attached to the tower 102 through the main frame 202, and at least one of the main frame 202 and a part of the transmission assembly 210 is bound by a sub-housing 312 of the nacelle 106, in particular of the upper and the lower nacelle modules 300, 302. For example, a rear portion of the transmission assembly 210, such as the output connection 216 of the gearbox 214 may be bound by the upper nacelle module 300, while the main bearing unit 212 may reside inside the sub-housing 312, for example, inside the upper segment 314 of the sub-housing.

The upper segment 314 may be continuous or discrete with respect to the upper nacelle module 300.

For example, the upper segment 314 may be integral with upper nacelle module 300 or may be attached to the upper nacelle module 300.

Similarly, the main frame 202 may be bound by the lower segment 316 of the sub-housing 312.

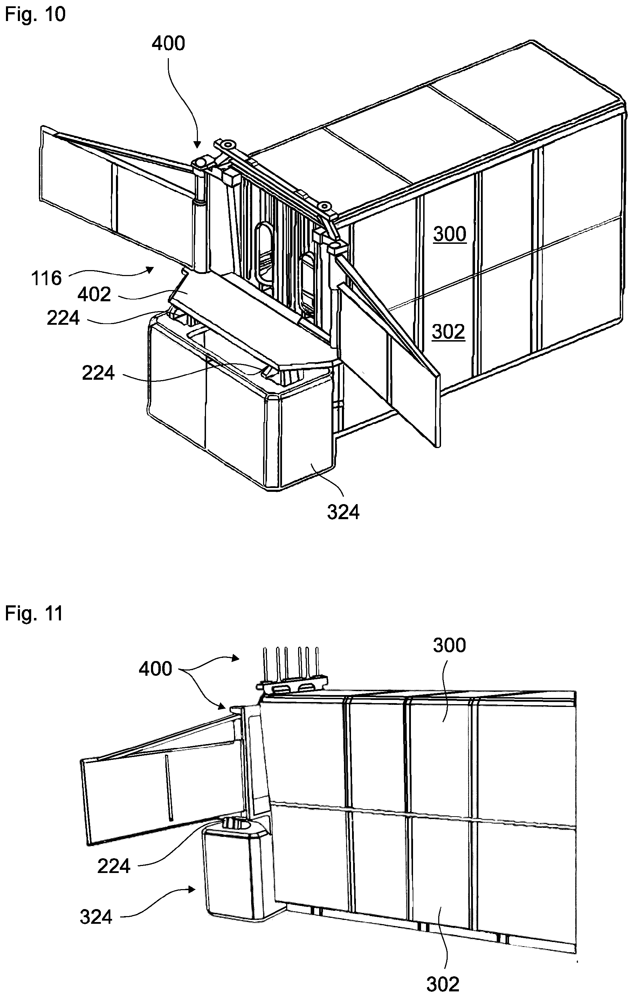

Figures 10 and 11 show the perspective views of the upper nacelle module 300 mounted on the lower nacelle module 302 along with the additional nacelle module 324 and an exemplary cooling and/or sensing arrangement 400. As shown, the third supporting frame 224 supports the additional nacelle module 324 at the bottom and the cooling and/or sensing arrangement 400 on top. The cooling and/or sensing arrangement 400 may be supported on a support member 402 which in turn is supported by the third supporting frame 224. The platform 402 may be accessed by the rear end 116 of the upper nacelle module 300 according to an example.

The described embodiments can be formed from relatively small modular parts, which can be transported using conventional trucks, rather than special heavy goods vehicles. This in return greatly reduces manufacturing costs and additional effort when transporting components to a construction site.

### Reference signs

- 100: wind turbine
- 102: tower
- 104: foundation
- 106: nacelle
- 108: rotor
- 110: rotor blade
- 112: rotor hub
- 116: rear end
- 200: assembly
- 202: main frame
- 204: sidewall of main frame
- 206: access opening
- 208: planar surface
- 210: transmission assembly
- 212: main bearing unit
- 214: gearbox
- 216: gearbox output connection
- 218: connecting structure
- 220: first supporting frame
- 222: second supporting frame
- 224: third supporting frame
- 226: electric generator
- 228: other components
- 230: transformer
- 232: connecting portion
- 234: first supporting portion
- 236: second supporting portion
- 238: connecting means
- 240: first side frames
- 242: first compartment
- 244: interconnected beams
- 246: diagonal beams
- 248: base frame
- 250: second side frames
- 252: beams of the base frame
- 254: second compartment
- 300: upper nacelle module
- 302: lower nacelle module
- 304: housing of the lower nacelle module
- 306: housing of the upper nacelle module
- 308: opening in the nacelle modules
- 312: sub-housing
- 314: upper segment
- 315: first interface
- 316: lower segment
- 324: additional nacelle module
- 400: cooling and/or sensing arrangement
- 402: support member

## Claims

1. A frame assembly (200) for supporting components arranged inside a nacelle (106) of a wind turbine (100), the assembly (200) comprising:
- a first supporting frame (220) comprising a first supporting portion (234) and a second supporting portion (236), wherein the second supporting portion (236) is arranged below the first supporting portion (234), and
- a second supporting frame (222) mounted on the first supporting frame (220) and attached thereto,
wherein,
- the second supporting frame (222) is configured to support at least an electric generator (226) of the wind turbine (100), and
- the first supporting frame (220) is configured to support at least one other component (228) of the wind turbine.

2. The assembly according to claim 1, wherein at least one of the first supporting frame (220) and the second supporting frame (222) comprises a connecting portion (232) configured to be attached to a main frame (202) of the wind turbine (100).

3. The assembly according to claim 2, wherein a height (H) of the connecting portion (234) is smaller than a height (h) of the main frame (202).

4. The assembly according to claim 1, wherein the first supporting frame (220) comprises a pair of first side frames (240), and the pair of first side frames (240) together with the first supporting portion (234) and the second supporting portion (236) is configured to define at least a first compartment (242) of the nacelle (106).

5. The assembly according to claim 4, wherein each of the pair of first side frames (240), the first supporting portion (234), and the second supporting portion (236) comprises a plurality of interconnected beams (244, 246).

6. The assembly according to any of the preceding claims, wherein the second supporting frame (222) comprises:
- at least one second side frame (250), and
- a base frame (248),
wherein, each of the at least one second side frame (250) and the base frame (248) comprises a plurality of interconnected beams (244,252).

7. The assembly according to any of the preceding claims, wherein at least a portion of the base frame (248) is attached to the first supporting portion (234) of the first supporting frame (220), and a remaining portion of the base frame (248) is configured to be attached to at least one of the connecting portion (232) and the main frame (202).

8. The assembly according to claim 6, wherein the base frame (248) and the first supporting portion (234) are configured to form an identical interface for at least a portion along a longitudinal direction of the assembly.

9. The assembly according to any of the preceding claims, wherein the assembly comprises a third supporting frame (224) attachable to at least one of a rear end (116), and a lateral side of at least one of the first supporting frame (220) and the second supporting frame (222).

10. The assembly according to claim 9, wherein the third supporting frame (224) is configured to support at least a transformer (230) of the wind turbine (100), such that the transformer (230) is located outside the first compartment (242) of the nacelle (106).

11. A nacelle (106) for a wind turbine (100), comprising:
- the assembly (200) according to any of the claims 1-10,
- an upper nacelle module (300), and
a lower nacelle module (302),
- wherein the upper nacelle module (300) and the lower nacelle module (302) are separate modules,
- wherein, the lower nacelle module (302) is attached beneath the upper nacelle module (300) and to the upper nacelle module (300),
- wherein the upper nacelle module (300) is dimensioned to accommodate, at least partly, a transmission assembly (210), and an electric generator (226) of the wind turbine (100), and
- wherein the lower nacelle module (302) is dimensioned to accommodate at least one other component (228), in particular at least one electric component excluding a transformer (230) of the wind turbine (100).

12. Nacelle according to claim 11, wherein the upper nacelle module (300) is attachable to the lower nacelle module (302) to form a first interface (315), by connecting means (228) selected from one or more of fasteners, pins, and rivets.

13. Nacelle according to claim 11, wherein the nacelle (106) comprises an additional nacelle module (324) dimensioned to accommodate a transformer (230) of the wind turbine (100), wherein the additional nacelle module (324) is located outside the lower nacelle module (302).

14. A wind turbine, comprising:
- a tower (102),
- a rotor (108),
- a nacelle (106) according to any of the claims 11-12 supported on the tower (102) and comprising:
o a main frame (202),
o a transmission assembly (210) supporting the rotor (108), wherein the transmission assembly (210) is mountable on the main frame (202), and
∘ an electric generator (226) configured to receive power from the rotor (108) via the transmission assembly (210),
wherein,
- at least the lower nacelle module (302) of the nacelle (106) is configured to be attached to the tower (102) through the main frame (202), and,
- at least one of the main frame (202) and a part of the transmission assembly (210) is bound by a sub-housing (312) of the nacelle (106), in particular of the upper and the lower nacelle modules (300, 302).

15. The wind turbine according to claim 14, wherein the sub-housing (312) comprises an upper segment (314) and a lower segment (316).
